# EUROPÄISCHE PATENTSCHRIFT

(11) **EP 4 577 828 B1**
(45) Veröffentlichungstag und Bekanntmachung des Hinweises auf die Patenterteilung: **09.09.2026**
(21) Anmeldenummer: 23741320.8
(22) Anmeldetag: 10.07.2023
(51) Int. Cl.: G01N 27/406, F02D 41/00

(54) **VERFAHREN ZUM BETREIBEN EINES SENSORS ZUR ERFASSUNG MINDESTENS EINER EIGENSCHAFT EINES MESSGASES IN EINEM MESSGASRAUM**
METHOD FOR OPERATING A SENSOR FOR DETECTING AT LEAST ONE PROPERTY OF A MEASURED GAS IN A MEASUREMENT GAS CHAMBER
PROCÉDÉ POUR FAIRE FONCTIONNER UN CAPTEUR POUR DÉTECTER AU MOINS UNE PROPRIÉTÉ D'UN GAZ MESURÉ DANS UNE CHAMBRE DE GAZ DE MESURE

(30) Priorität: 25.08.2022 DE 102022208780
(43) Veröffentlichungstag der Anmeldung: 02.07.2025
(73) Patentinhaber: Robert Bosch GmbH, 70442 Stuttgart (DE)
(72) Erfinder: LEDERMANN, Bernhard, 71263 Weil Der Stadt (DE); WEISSER, Fabian, 71088 Holzgerlingen (DE)
(86) Internationale Anmeldenummer: PCT/EP2023/068961
(87) Internationale Veröffentlichungsnummer: WO 2024/041800

(56) Entgegenhaltungen:
- DE-A1- 102008 039 587
- DE-A1- 19 734 250
- JP-A- H10 123 091

## Beschreibung

### Stand der Technik

Aus dem Stand der Technik ist eine Vielzahl von Sensoren und Verfahren zur Erfassung mindestens einer Eigenschaft eines Messgases in einem Messgasraum bekannt. Dabei kann es sich grundsätzlich um beliebige physikalische und/oder chemische Eigenschaften des Messgases handeln, wobei eine oder mehrere Eigenschaften erfasst werden können. Die Erfindung wird im Folgenden insbesondere unter Bezugnahme auf eine qualitative und/oder quantitative Erfassung eines Anteils einer Gaskomponente des Messgases beschrieben, insbesondere unter Bezugnahme auf eine Erfassung eines Sauerstoffanteils in dem Messgasteil. Der Sauerstoffanteil kann beispielsweise in Form eines Partialdrucks und/oder in Form eines Prozentsatzes erfasst werden. Alternativ oder zusätzlich sind jedoch auch andere Eigenschaften des Messgases erfassbar, wie beispielsweise die Temperatur.

Aus dem Stand der Technik sind insbesondere keramische Sensoren bekannt, welche auf der Verwendung von elektrolytischen Eigenschaften bestimmter Festkörper basieren, also auf Ionen leitenden Eigenschaften dieser Festkörper. Insbesondere kann es sich bei diesen Festkörpern um keramische Festelektrolyte handeln, wie beispielsweise Zirkoniumdioxid (ZrO₂), insbesondere yttriumstabilisiertes Zirkoniumdioxid (YSZ) und scandiumdotiertes Zirkoniumdioxid (ScSZ), die geringe Zusätze an Aluminiumoxid (Al₂O₃) und/oder Siliziumoxid (SiO₂) enthalten können.

Beispielsweise können derartige Sensoren als so genannte Lambdasonden oder als Stickoxidsensoren ausgestaltet sein, wie sie beispielsweise aus K. Reif, Deitsche, K-H. et al., Kraftfahrtechnisches Taschenbuch, Springer Vieweg, Wiesbaden, 2014, Seiten 1338 -1347, bekannt sind. Mit Breitband-Lambdasonden, insbesondere mit planaren Breitband-Lambdasonden, kann beispielsweise die Sauerstoffkonzentration im Abgas in einem großen Bereich bestimmt und damit auf das Luft-Kraftstoff-Verhältnis im Brennraum geschlossen werden. Die Luftzahl I (Lambda) beschreibt dieses Luft-Kraftstoff-Verhältnis. Stickoxid-Sensoren bestimmen sowohl die Stickoxid- als auch die Sauerstoffkonzentration im Abgas.

Durch Kombination einer Pumpzelle, der Messzelle, und einer Sauerstoff-Referenzzelle, der Nernst-Zelle, kann ein Sensor zur Messung des Sauerstoffgehalts in einem Umgebungsgas aufgebaut werden. In einer Pumpzelle, die nach dem amperometrischen Pumpprinzip arbeitet, diffundieren bei Anlegen einer Spannung oder eines Stromes an die Pumpelektroden, die sich an unterschiedlichen Gasen befinden, ein Sauerstoffionenstrom durch einen keramischen Körper (den sauerstoffleitenden Festelektrolyten), der die Gase voneinander trennt ("pumpen"). Wird die Pumpzelle dazu genutzt, den Sauerstoff-Partialdruck in einem Hohlraum, in das Umgebungsgas diffundieren kann, konstant zu halten, dann kann über die Messung des elektrischen Stroms auf die transportierte Menge Sauerstoff geschlossen werden. Dieser Pumpstrom ist, gemäß des Diffusionsgesetzes, direkt proportional zum Sauerstoff-Partialdruck im Umgebungsgas. Mit einer Nernst-Zelle kann das Verhältnis des SauerstoffPartialdrucks im Hohlraum zum Sauerstoff-Partialdruck in einem weiteren Referenzgasraum über die sich ausbildende Nernstspannung bestimmt werden.

Die elektrochemische Einheit eines derartigen Sensors kann als Regelstrecke in einem Regelkreis betrachtet werden. Die Steuergröße dieses Regelkreises ist die Spannung oder optional der Strom am Pumpelektrodenpaar. Die Regelgröße ist die Nernstspannung, die gemessen wird. Ziel der Regelung ist, trotz Änderungen des Sauerstoffgehalts im Abgas, den Sauerstoffpartialdruck im Hohlraum möglichst nah an einem spezifizierten bzw. vorgegebenen Wert zu halten. Zum Messen des Sauerstoffpartialdrucks im Hohlraum bzw. des Verhältnisses des Sauerstoffpartialdrucks im Hohlraum zum Partialdruck in der Referenzzelle dient die Nernstspannung. Über die angelegte Spannung an das Pumpelektrodenpaar kann der Sauerstoffpartialdruck im Hohlraum gesteuert werden. Dadurch, dass Sauerstoffionen in den Hohlraum hineintransportiert oder aus diesem entfernt werden, was auch als Pumpen bezeichnet wird, kann die Gaskonzentration über die angelegte Pumpspannung bzw. den Pumpstrom aktiv beeinflusst werden. Alle Elektroden in dem Hohlraum haben einen gemeinsamen Rückleiter. Um auch negative Spannungen darstellen zu können, liegt diese virtuelle Masse auf einem erhöhten Potenzial zur elektrischen Masse. Auf diese Spannung werden die Nernstspannung oder die Spannung an der ersten Elektrode bezogen.

Zur Bestimmung des Sauerstoffpartialdrucks, bzw. des Sauerstoffgehalts, wird bei Breitband-Lambdasonden und Stickoxidsensoren ein Pumpstromsignal ausgewertet, das näherungsweise linear zur vorliegenden Sauerstoffkonzentration des Umgebungsgases ist.

Bei einer lambdageregelten Brennkraftmaschine, z.B. einem Ottomotor mit einem Drei-Wege-Abgaskatalysator und einer Lambdasonde, wird das Luft-Kraftstoffverhältnis im Homogenbetrieb durch die Lambdaregelung derart eingeregelt, dass der Lambda-Mittelwert der Gemischzusammensetzung für alle Zylinder den Wert Lambda = 1.0 beträgt und so einen abgasarmen Betrieb gewährleistet.

Aufgrund von Zumesstoleranzen bei der z.B. mittels Injektoren oder Einspritzventilen erfolgenden Kraftstoffzumessung der Brennkraftmaschine sowie aufgrund von durch Systemtoleranzen bedingten zylinderindividuellen Unterschieden in der Gemischzusammensetzung, d.h. der Zylinderbefüllung mit Kraftstoff und Luft, kommt es zu einer Ungleichverteilung der Lambdawerte einzelner Zylinder, obwohl der Mittelwert für alle Zylinder den gewünschten Lambdawert 1.0 annimmt. So kann z.B. bei einem Vierzylindermotor Lambda (Zyl.1) = 1,1, Lambda (Zyl.2) = 1,1, Lambda (Zyl.3) = 1,1 und Lambda (Zyl.4) = 0,7 gegeben sein, was insgesamt einem Mittelwert von Lambda = 1,0 entspricht.

Dieses Ungleichgewicht zwischen den einzelnen Zylindern führt zu einer verringerten Lebensdauer der Bauteile, da z.B. starke Pulse auf die Kurbelwelle wirken, wenn der vertrimmte Zylinder zündet. Die in vielen Ländern gültige Gesetzgebung schreibt daher diesem Ungleichgewicht entgegenwirkende bzw. verhindernde Abgasdiagnose- bzw. Regelungsstrategien vor.

Aus der DE 195 27 218 A1 ist ein gattungsgemäßes Verfahren bekannt, bei dem eine mögliche Ungleichverteilung von Zylinder-Lambdawerten aus einer erfassten Laufunruhe der Brennkraftmaschine, d.h. der Veränderung des Motormoments nach einer sprunghaften Abmagerung, abgeleitet wird. Dort liegt der technische Effekt zugrunde, dass zwischen der Gemischzusammensetzung und einer aus der Verbrennung resultierenden Kurbelwellenbeschleunigung ein eindeutiger Zusammenhang besteht. Zylinderindividuelle Lambdaunterschiede einzelner Zylinder werden dadurch angepasst, dass die Zylinder nacheinander abgemagert werden und aus der erfassten Laufunruheänderung ein zylinderindividuelles Merkmal zur Vertrimmung des jeweiligen Zylinders abgeleitet wird. Durch die gleichzeitige Anfettung der nicht-abgemagerten Zylinder wird zudem sichergestellt, dass der Mittelwert von Lambda für alle Zylinder konstant bei 1.0 liegt.

Trotz der durch diese Sensoren und Verfahren zu deren Funktionskontrolle bewirkten Vorteile beinhalten diese noch Verbesserungspotential. So zeigen aktuelle Algorithmen zur Erkennung einer zylinder-individuellen Vertrimmung Schwächen, wenn ein Jitter, d.h. ein variabler Anteil der Latenz, im zu Grunde liegenden Pumpstromsignal an der Lambdasonde vorliegt, denn durch den Jitter entsteht ein Unsicherheitsbereich, der bei bestimmten Drehzahlen und Jittern dazu führen kann, dass mehrere Zylinder für die vorliegende Vertrimmung in Frage kommen. Eine Bestimmung des Zylinders, welcher vertrimmt ist, ist somit nicht immer zuverlässig möglich. Bei üblichen Lambda-Erfassungssystemen wird ein relevanter Teil des Jitters durch die Auswerteelektronik erzeugt, wenn beispielsweise die Daten interruptgesteuert aufgenommen, dann als Paket weiterverarbeitet und schließlich in einem Standard-Raster an die Anwender übertragen werden.

Weitere Verfahren zum Betreiben von Sensoren sind aus der DE 197 34 250 A1, der DE 10 2008 039 587 und der JP H10 123 091 A bekannt.

DE 197 34 250 A1 offenbart offenbart ein Verfahren zum Betreiben eines Luft-Kraftstoff-Verhältnis-Sensors, bei dem Sensordaten erfasst, in einem Speicher bzw. Ringpuffer abgelegt und zur weiteren Verarbeitung ausgewählt werden, wobei ein Messwert ausgewählt wird, der einem geeigneten bzw. optimalen Zeitpunkt entspricht. Dabei wird eine zeitliche Zuordnung der Sensordaten berücksichtigt, um eine möglichst repräsentative Bereitstellung der Messwerte für nachfolgende Verarbeitungs- und Regelprozesse zu gewährleisten.

### Offenbarung der Erfindung

Es wird daher ein Verfahren zum Betreiben eines Sensors zur Erfassung mindestens einer Eigenschaft eines Messgases in einem Messgasraum vorgeschlagen, welches die Nachteile bekannter Verfahren zum Betreiben dieser Sensoren zumindest weitgehend vermeidet und welches insbesondere geeignet ist, einen Jitter-Anteil aus dem Signal zu eliminieren und somit die Basis für eine zuverlässige zylinder-individuelle Vertrimmungserkennung zu bieten.

Ein erfindungsgemäßes Verfahren zum Betreiben eines Sensors zur Erfassung mindestens einer Eigenschaft eines Messgases in einem Messgasraum, insbesondere zur Erfassung eines Anteils einer Gaskomponente in dem Messgas, wobei der Sensor ein Sensorelement zur Erfassung der Eigenschaft des Messgases aufweist, wobei das Sensorelement mindestens eine Nernstzelle aufweist, ist in Anspruch 1 definiert und umfasst die folgenden Schritte:
- Messen einer Nernstspannung der Nernstzelle und quantitative Bestimmung einer die Eigenschaft des Messgases beschreibenden Zielgröße basierend auf der Nernstspannung,
- Aufzeichnen eines Zielgrößendatenpakets basierend auf der Zielgröße,
- Zuordnen eines aktuellen Zeitstempels zu dem Zielgrößendatenpaket,
- Verarbeiten des Zielgrößendatenpakets auf einem Signalverarbeitungspfad,
- Abfragen einer aktuellen Systemzeit,
- Korrigieren des Zeitstempels des aktuell verarbeiteten Zielgrößenpakets basierend auf einer vorbestimmten Zeitverzögerung und der aktuellen Systemzeit,
- Konvertieren des korrigierten Zeitstempels zum Bilden einer Anzahl von Messwerten,
- Ermitteln eines zeitlichen Korrekturindex für die Zielgröße basierend auf der Anzahl von Messwerten und
- Ermitteln eines korrigierten Zielgrößenwerts basierend auf dem zeitlichen Korrekturindex.

Es wird somit zum Zeitpunkt der Messwerterfassung, wie beispielsweise in der Basissoftware des Steuergeräts, ein neu einzuführender Zeitstempel neben den bereits existierenden Messwerten, wie beispielsweise der Nernstspannung oder daraus abgeleiteten Größen wie Pumpstromwerten, aufgezeichnet. Die Messwerte werden mit dem zugehörigen Zeitstempel in einen Ringbuffer geschrieben. In dem Software-Teil, der das Signal der Anwender-Software zur Verfügung stellt, wird der Messwert aus dem Ringbuffer herausgegriffen, der gegenüber der aktuellen System-Zeit um einen bestimmten Zeitversatz verzögert ist. Dieser Zeitversatz ist größer als die mögliche Worst-Case-Verzögerung durch den Jitter. Somit ist der variable Teil der Zeitverzögerung (der Jitter) eliminiert.

Die Zielgröße kann die Nernstspannung selbst oder eine davon abgeleitete Größe sein. Somit kann das Verfahren entweder die Nernstspannung oder daraus abgeleitete Messgrößen korrigieren.

Das Sensorelement kann weiterhin eine Pumpzelle aufweisen. Die Zielgröße kann eine Stellgröße bei Regelung der Nernstspannung sein und diese Stellgröße kann ein Strom oder eine Spannung einer Pumpzelle des Sensorelements oder der Nernstzelle sein. Entsprechend ist das Verfahren insbesondere bei Sprungsonden oder Breitbandlambdasonden anwendbar.

Die vorbestimmte Zeitverzögerung kann konstant sein. Damit lässt sich ausgehend von einer bekannten konstanten Größe der Jitter besonders zuverlässig eliminieren.

Die vorbestimmte Zeitverzögerung kann größer als eine Verzögerung beim Verarbeiten des Zielgrößendatenpakets auf dem Signalverarbeitungspfad sein. Dieser konstante Zeitversatz ist größer als die mögliche Worst-Case-Verzögerung durch den Jitter. Somit ist der variable Teil der Zeitverzögerung (der Jitter) eliminiert.

Das Korrigieren des Zeitstempels kann Addieren der vorbestimmten Zeitverzögerung zu und Subtrahieren der aktuellen Systemzeit von dem Zeitstempel umfassen. Damit lässt sich der Zeitstempel durch einfache Berechnungen zuverlässig und korrekt korrigieren.

Das Verfahren kann weiterhin Speichern von Zielgrößendatenpaketen mit dem zugeordneten Zeitstempel in einem Speicher umfassen. Damit kann auf die Werte mehrmals zurückgegriffen werden.

Der Signalverarbeitungspfad kann Teil einer Anwendersoftware sein. Die Anwendersoftware kann einen Ringbuffer umfassen. Damit ist ein Zugriff schnell und mehrmals möglich, da die Messwerte mit dem zugehörigen Zeitstempel in den Ringbuffer geschrieben werden und in dem Software-Teil, der das Signal der Anwender-Software zur Verfügung stellt, kann der Messwert aus dem Ringbuffer herausgegriffen werden.

Das Ermitteln des korrigierten Zielgrößenwerts basierend auf dem zeitlichen Korrekturindex kann Zugreifen auf einen in dem Ringbuffer gespeicherten Zielgrößendatenpaket, ausgehend von einem zuletzt gespeicherten Zielgrößendatenpaket, umfassen. Damit lässt sich ausgehend von einem zuletzt bekannten Messwert, wie beispielsweise einem Pumpstromwert, die Korrektur vornehmen.

Der korrigierte Zielgrößenwert kann durch Subtrahieren des Korrekturindex von dem Index des zuletzt gespeicherten Zielgrößendatenpaket ermittelt werden. Damit lässt sich die Korrektur durch einfache Berechnung vornehmen.

Das Aufzeichnen des Zielgrößendatenpakets kann mit einer höheren Taktung als das Abfragen der aktuellen Systemzeit erfolgen. Damit werden die Messwerte häufiger aufgezeichnet als die Abfrage der Systemzeit erfolgt, so dass eine ausreichende Anzahl Messwerte für das Verfahren zur Verfügung gestellt wird.

Schließlich betrifft die vorliegende Offenbarung auch einen Sensor (nicht Teil der beanspruchten Erfindung) zur Erfassung mindestens einer Eigenschaft eines Messgases in einem Messgasraum, insbesondere zur Erfassung eines Anteils einer Gaskomponente in dem Messgas oder einer Temperatur des Messgases, umfassend ein Sensorelement zur Erfassung der Eigenschaft des Messgases, wobei das Sensorelement mindestens eine Nernstzelle aufweist, wobei die Sensoranordnung weiterhin ein elektronisches Steuergerät mit dem Computerprogramm zur Durchführung des erfindungsgemäßen Verfahrens aufweist.

Beispielsweise weist das Sensorelement einen Festelektrolyten, eine erste Elektrode, eine zweite Elektrode, eine dritte Elektrode und eine vierte Elektrode auf, wobei die erste Elektrode und die zweite Elektrode derart mit dem Festelektrolyten verbunden sind, dass die erste Elektrode, die zweite Elektrode und der Festelektrolyt eine Pumpzelle bilden, wobei die dritte Elektrode und die vierte Elektrode derart mit dem Festelektrolyten verbunden sind, dass die dritte Elektrode, die vierte Elektrode und der Festelektrolyt eine Nernstzelle bilden.

Unter einem Festelektrolyten ist ein Körper oder Gegenstand mit elektrolytischen Eigenschaften, also mit Ionen leitenden Eigenschaften, zu verstehen. Insbesondere kann es sich um einen keramischen Festelektrolyten handeln. Dies umfasst auch das Rohmaterial eines Festelektrolyten und daher die Ausbildung als so genannter Grünling oder Braunling, der erst nach einem Sintern zu einem Festelektrolyten wird. Insbesondere kann der Festelektrolyt als Festelektrolytschicht oder aus mehreren Festelektrolytschichten ausgebildet sein. Unter einer Schicht ist eine einheitliche Masse in flächenhafter Ausdehnung einer gewissen Höhe zu verstehen, die über, unter oder zwischen anderen Elementen liegt.

Unter einer Elektrode ist allgemein ein Element zu verstehen, welches in der Lage ist, den Festelektrolyten derart zu kontaktieren, dass durch den Festelektrolyten und die Elektrode ein Strom aufrechterhalten werden kann. Dementsprechend kann die Elektrode ein Element umfassen, an welchem die Ionen in den Festelektrolyten eingebaut und/oder aus dem Festelektrolyten ausgebaut werden können. Typischerweise umfassen die Elektroden eine Edelmetallelektrode, welche beispielsweise als Metall-Keramik-Elektrode auf dem Festelektrolyten aufgebracht sein kann oder auf andere Weise mit dem Festelektrolyten in Verbindung stehen kann. Typische Elektrodenmaterialien sind Platin-Cermet-Elektroden. Auch andere Edelmetalle, wie beispielsweise Gold oder Palladium, sind jedoch grundsätzlich einsetzbar.

Unter einem Heizelement ist ein Element zu verstehen, das zum Erwärmen des Festelektrolyten und der Elektroden auf mindestens ihre Funktionstemperatur und vorzugsweise auf ihre Betriebstemperatur dient. Die Funktionstemperatur ist diejenige Temperatur, ab der der Festelektrolyt für Ionen leitend wird und die ungefähr 350 °C beträgt. Davon ist die Betriebstemperatur zu unterscheiden, die diejenige Temperatur ist, bei der das Sensorelement üblicherweise betrieben wird und die höher ist als die Funktionstemperatur. Die Betriebstemperatur kann beispielsweise von 700 °C bis 950 °C sein. Das Heizelement kann einen Heizbereich und mindestens eine Zuleitungsbahn umfassen. Unter einem Heizbereich ist der Bereich des Heizelements zu verstehen, der in dem Schichtaufbau entlang einer zu der Oberfläche des Sensorelements senkrechten Richtung mit einer Elektrode überlappt. Üblicherweise erwärmt sich der Heizbereich während des Betriebs stärker als die Zuleitungsbahn, so dass diese unterscheidbar sind. Die unterschiedliche Erwärmung kann beispielsweise dadurch realisiert werden, dass der Heizbereich einen höheren elektrischen Widerstand aufweist als die Zuleitungsbahn. Der Heizbereich und/oder die Zuleitung sind beispielsweise als elektrische Widerstandsbahn ausgebildet und erwärmen sich durch Anlegen einer elektrischen Spannung. Das Heizelement kann beispielsweise aus einem Platin-Cermet hergestellt sein.

Unter einem Regelkreis ist im Rahmen der vorliegenden Erfindung ein in sich geschlossener Wirkungsablauf für die Beeinflussung einer physikalischen Größe in einem technischen Prozess zu verstehen. Wesentlich hierbei ist die Rückführung des aktuellen Wertes, der auch als Ist-Wert bezeichnet wird, an das Regelgerät, das einer Abweichung vom Soll-Wert kontinuierlich entgegenwirkt. Der Regelkreis besteht aus der Regelstrecke, dem Regelgerät und einer negativen Rückkopplung des Ist-Werts als Regelgröße. Die Regelgröße wird mit dem Soll-Wert als Führungsgröße verglichen. Die Regelabweichung zwischen dem Ist-Wert und dem Soll-Wert wird dem Regelgerät zugeführt, das daraus entsprechend der gewünschten Dynamik des Regelkreises eine Steuergröße für die Regelstrecke bildet. Unter der Regelstrecke ist im Rahmen der vorliegenden Erfindung derjenige Teil des Regelkreises zu verstehen, der die Regelgröße enthält, auf die das Regelgerät über die Steuer- oder Stellgröße wirken soll. Im Rahmen der vorliegenden Erfindung ist die elektrochemische Einheit des Sensors die Regelstrecke.

Unter einer Messgröße ist im Rahmen der vorliegenden Erfindung grundsätzlich eine beliebige physikalische und/oder chemische Größe und ein diese Größe(n) äquivalent anzeigendes Signal, d.h. ein äquivalentes Signal, zu verstehen. Bevorzugt handelt es sich bei der Messgröße um mindestens ein Messsignal des Sensorelements. Bevorzugt kann es sich bei der Messgröße um mindestens einen Pumpstrom, beispielsweise einen Grenzstrom, handeln. Es kann sich bei der Messgröße aber auch um eine von dem Pumpstrom abhängige Größe handeln. Beispielsweise kann es sich bei der Messgröße um eine Pumpspannung und/oder um eine umgesetzte Ladung handeln. Unter dem Ausdruck "erfasst werden" in diesem Zusammenhang ist im Rahmen der vorliegenden Erfindung zu verstehen, dass die Messgröße beispielsweise als Messsignal von dem Sensorelement ausgegeben wird und/oder die Messgröße von einem Steuergerät verarbeitet und/oder ausgewertet und/oder gespeichert wird.

Unter Latenz ist im Rahmen der vorliegenden Erfindung allgemein die Laufzeit eines Signals zu verstehen. Unter der Laufzeit versteht man die zeitliche Differenz zwischen dem Eintritt eines Signals in ein (kausales) System und dem Austritt. Insbesondere ist Latenz das Zeitintervall, um das ein Ereignis verzögert wird. Die Verarbeitungsverzögerung ist durch die zur Weiterverarbeitung des Signals benötigte Zeit bestimmt. Sie kann durch Einsatz von mehr Rechenleistung verringert werden. Latenz (engl.: Latency) bezeichnet insbesondere die Laufzeit einer Information (Datenpaket) von ihrer Quelle bis zum Ziel. Latenzzeiten werden in der Round Trip Time (RTT) gemessen. Der RTT-Wert ist der doppelte Latenz-Wert. RTT-Werte über 100ms sind für die tägliche Arbeit nicht mehr akzeptabel, für Echtzeitanwendungen sollte dieser Wert so klein wie möglich sein. Man beachte jedoch, dass für die vorliegende Erfindung auch größere Latenzen akzeptiert werden können und nur der Jitter ein Problem darstellt, da die Signale sich periodisch bei konstanter Drehzahl wiederholen. Verzögerungszeiten entstehen z.B. durch: die Laufzeit der Signale auf einem Übertragungsmedium (Kupfer, Glas usw.), die Übertragungszeit eines Pakets über die einzelnen Teilstrecken mit einer limitierten Bandbreite, die Verarbeitung der Pakete durch die beteiligten Netzwerkkomponenten, die Warteschlangen durch Stausituationen auf einzelnen Teilstrecken oder Eigenschaften des Übertragungsprotokolls (UDP, TCO, RTP etc.)

Unter Jitter ist im Rahmen der vorliegenden Erfindung allgemein die Varianz in der Laufzeit der einzelnen Datenpakete zu verstehen. Die Varianz, die aus der unterschiedlichen Laufzeit der Gaspakete zur Sonde bei unterschiedlichen Drehzahlen entsteht, muss durch Kennfelder eliminiert werden. Diese Laufzeitunterschiede sind aber im Gegensatz zum Jitter im Signalverarbeitungsprozess konstant und reproduzierbar, da das Auftreten eines Peaks im Signal an der Sonde für jede Drehzahl bei einem bestimmten Kurbelwellenwinkel einem bestimmten Zylinder zugeordnet werden kann. Der Effekt der Varianz in der Laufzeit der einzelnen Datenpakete ist bei Real-Time-Anwendungen im Internet (wie Internetradio, VoIP, Video-Anwendungen, Prozeßsteuerungen etc.) sehr störend, da dadurch Datenpakete zu spät eintreffen können, um noch rechtzeitig Berücksichtigung zu finden. Jitter wird durch einen sogenannten Jitterbuffer reduziert, allerdings zum Preis der weiteren Erhöhung der Latenz. Als Jitter bezeichnet man auch das zeitliche Taktzittern bei der Übertragung von Digitalsignalen, eine leichte Genauigkeitsschwankung im Übertragungstakt (engl.: Clock). Jitter ist als Störsignal im Normalfall unerwünscht. Allgemeiner ist Jitter in der Übertragungstechnik ein abrupter und unerwünschter Wechsel der Signalcharakteristik. Dies kann sowohl Amplitude als auch Frequenz und Phasenlage betreffen. Der Jitter ist die erste Ableitung einer Verzögerung (engl.: Delay). Die spektrale Darstellung der zeitlichen Abweichungen wird als Phasenrauschen bezeichnet. Jitter ist nicht zu verwechseln mit Quantisierungsfehlern.

Latenzen und Jitter sind gerade für Echtzeitanwendungen von enormer Bedeutung. Schlechte Latenz- und Jitterwerte beeinflussen die Qualität der Datenübertragung, d.h. die Paketlaufzeit ist an sich zu lang bzw. kommen einzelne Pakete verzögert an, was wiederum zu Informationsverlusten führt.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
- Figur 1: einen prinzipiellen Aufbau eines beispielhaften Sensors,
- Figur 2: eine schematische Darstellung eines Ablaufs eines erfindungsgemäßen Verfahrens,
- Figur 3: ein Blockschaltbild des Speichervorgangs für Pumpstromwerte,
- Figur 4: ein Blockschaltbild der Berechnung des Korrekturindex, und
- Figur 5: eine Tabelle mit beispielhaften Berechnungsgrößen für das erfindungsgemäße Verfahren.

### Ausführungsformen der Erfindung

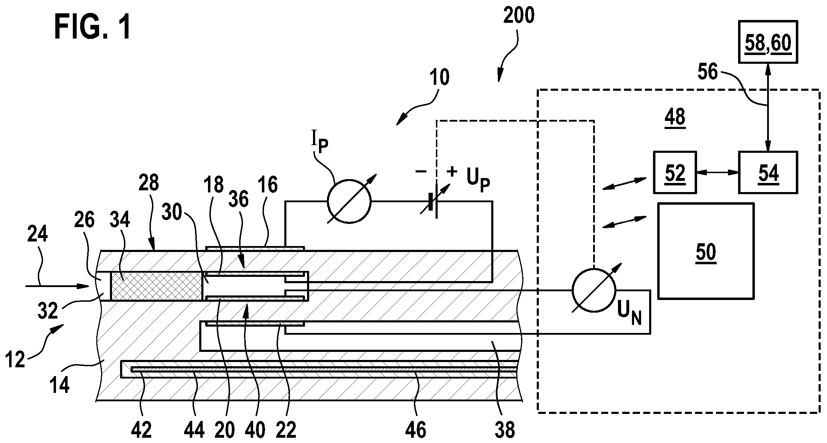

Figur 1 zeigt einen prinzipiellen Aufbau eines beispielhaften Sensors 10. Der in Figur 1 dargestellte Sensor 10 kann zum Nachweis von physikalischen und/oder chemischen Eigenschaften eines Messgases verwendet werden, wobei eine oder mehrere Eigenschaften erfasst werden können. Die Erfindung wird im Folgenden insbesondere unter Bezugnahme auf eine qualitative und/oder quantitative Erfassung einer Gaskomponente des Messgases beschrieben, insbesondere unter Bezugnahme auf eine Erfassung eines Sauerstoffanteils in dem Messgas. Der Sauerstoffanteil kann beispielsweise in Form eines Partialdrucks und/oder in Form eines Prozentsatzes erfasst werden. Grundsätzlich sind jedoch auch andere Arten von Gaskomponenten erfassbar, wie beispielsweise Stickoxide, Kohlenwasserstoffe und/oder Wasserstoff. Alternativ oder zusätzlich sind jedoch auch andere Eigenschaften des Messgases erfassbar. Die Erfindung ist insbesondere im Bereich der Kraftfahrzeugtechnik einsetzbar, so dass es sich bei dem Messgasraum insbesondere um einen Abgastrakt einer Brennkraftmaschine handeln kann, bei dem Messgas insbesondere um ein Abgas. Beispielsweise ist der Sensor 10 als Lambdasonde ausgebildet, insbesondere als Breitbandlambdasonde, wie nachstehend ausführlicher erläutert wird. Es wird jedoch explizit betont, dass es sich bei dem Sensor 10 alternativ um eine Sprungsonde handeln kann.

Der Sensor 10 weist ein Sensorelement 12 auf. Das Sensorelement 12 kann als keramischer Schichtaufbau ausgebildet sein, wie nachstehend ausführlicher beschrieben wird. Das Sensorelement 12 weist einen Festelektrolyten 14, eine erste Elektrode 16, eine zweite Elektrode 18, eine dritte Elektrode 20 und eine vierte Elektrode 22 auf. Der Festelektrolyt 14 kann aus mehreren keramischen Schichten in Form von Festelektrolytschichten zusammengesetzt sein oder mehrere Festelektrolytschichten umfassen. Beispielsweise umfasst der Festelektrolyt 14 eine Pumpfolie oder Pumpschicht, eine Zwischenfolie oder Zwischenschicht und eine Heizfolie bzw. Heizschicht, die übereinander bzw. untereinander angeordnet sind. Die Bezeichnung der Elektroden 16, 18, 20, 22 soll keine Gewichtung ihrer Bedeutung angeben, sondern dient lediglich dazu, diese begrifflich zu unterscheiden.

Das Sensorelement 12 weist ferner einen Gaszutrittsweg 24 auf. Der Gaszutrittsweg 24 weist ein Gaszutrittsloch 26 auf, das sich von einer Oberfläche 28 des Festelektrolyten 14 ins Innere des Schichtaufbaus des Sensorelements 12 erstreckt. In dem Festelektrolyten 14 ist ein Elektrodenhohlraum 30 vorgesehen, der das Gaszutrittsloch 26 umgibt, beispielsweise ringförmig oder rechteckig. Der Elektrodenhohlraum 30 ist Teil des Gaszutrittswegs 24 und steht über das Gaszutrittsloch 26 mit dem Messgasraum in Verbindung. Beispielsweise erstreckt sich das Gaszutrittsloch 26 als zylindrisches Sackloch senkrecht zu der Oberfläche 28 des Festelektrolyten 14 in das Innere des Schichtaufbaus des Sensorelements 12. Insbesondere ist der Elektrodenhohlraum 30 im Wesentlichen ringförmig oder rechteckig ausgebildet und bei einer Betrachtung in einer Querschnittsansicht von drei Seiten von dem Festelektrolyten 14 begrenzt. Zwischen dem Gaszutrittsloch 26 und dem Elektrodenhohlraum 30 ist ein Kanal 32 angeordnet, welcher ebenfalls Bestandteil des Gaszutrittswegs 24 ist. In diesem Kanal 32 ist eine Diffusionsbarriere 34 angeordnet, welche ein Nachströmen von Gas aus dem Messgasraum in den Elektrodenhohlraum 30 vermindert oder sogar verhindert und lediglich eine Diffusion ermöglicht.

Die erste Elektrode 16 ist auf der auf der Oberfläche 28 des Festelektrolyten 14 angeordnet. Die erste Elektrode 16 kann das Gaszutrittsloch 26 ringförmig umgeben und von dem Messgasraum beispielsweise durch eine nicht näher gezeigte gasdurchlässige Schutzschicht getrennt sein. Die zweite Elektrode 18 ist in dem Elektrodenhohlraum 30 angeordnet. Die zweite Elektrode 18 kann ebenfalls ringförmig ausgestaltet sein und rotationssymmetrisch um das Gaszutrittsloch 26 angeordnet sein. Beispielsweise sind die erste Elektrode 16 und die zweite Elektrode 18 koaxial zu dem Gaszutrittsloch 26 angeordnet. Die erste Elektrode 16 und die zweite Elektrode 18 sind derart mit dem Festelektrolyten 14 und insbesondere mit der Pumpschicht verbunden, insbesondere elektrisch verbunden, dass die erste Elektrode 16, die zweite Elektrode 18 und der Festelektrolyt 14 eine Pumpzelle 36 bilden. Entsprechend können die erste Elektrode 16 auch als äußere Pumpelektrode und die zweite Elektrode 18 als innere Pumpelektrode bezeichnet werden. Über die Diffusionsbarriere 34 lässt sich ein Grenzstrom der Pumpzelle 36 einstellen. Der Grenzstrom stellt somit einen Stromfluss zwischen der ersten Elektrode 16 und der zweiten Elektrode 18 über den Festelektrolyten 14 dar.

Das Sensorelement 12 weist weiterhin einen Referenzgasraum 38 auf. Der Referenzgasraum 38 kann sich senkrecht zu einer Erstreckungsrichtung des Gaszutrittslochs 26 in das Innere des Festelektrolyten 14 erstrecken. Wie oben erwähnt, ist das Gaszutrittsloch 26 zylindrisch ausgebildet, so dass die Erstreckungsrichtung des Gaszutrittslochs 26 parallel zu einer Zylinderachse des Gaszutrittslochs 26 verläuft. In diesem Fall erstreckt sich der Referenzgasraum 38 senkrecht zu der Zylinderachse des Gaszutrittslochs 26. Es wird ausdrücklich erwähnt, dass der Referenzgasraum 38 auch in einer gedachten Verlängerung des Gaszutrittslochs 26 und somit weiter im Inneren des Festelektrolyten 14 angeordnet sein kann. Der Referenzgasraum 38 muss nicht als makroskopischer Referenzgasraum ausgebildet sein. Beispielsweise kann der Referenzgasraum 38 als so genannte gepumpte Referenz ausgeführt sein, das heißt als künstliche Referenz.

Die dritte Elektrode 20 ist ebenfalls in dem Elektrodenhohlraum 30 angeordnet. Beispielsweise liegt die dritte Elektrode 20 der zweiten Elektrode 18 gegenüber. Die vierte Elektrode 22 ist in dem Referenzgasraum 38 angeordnet. Die dritte Elektrode 20 und die vierte Elektrode 22 sind derart mit Festelektrolyten 14 verbunden, dass die dritte Elektrode 20, die vierte Elektrode 22 und derjenige Teil des Festelektrolyten 14 zwischen der dritten Elektrode 22 und der vierten Elektrode 22 eine Nernstzelle 40 bilden. Mittels der Pumpzelle 36 kann beispielsweise ein Pumpstrom durch die Pumpzelle 36 derart eingestellt werden, dass in dem Elektrodenhohlraum 30 die Bedingung λ (Lambda)= 1 oder eine andere bekannte Zusammensetzung herrscht. Diese Zusammensetzung wird wiederum von der Nernstzelle 40 erfasst, indem eine Nernstspannung U_{VS} zwischen der dritten Elektrode 20 und der vierten Elektrode 22 gemessen wird. Da in dem Referenzgasraum 38 eine bekannte Gaszusammensetzung vorliegt bzw. diese einem Sauerstoffüberschuss ausgesetzt ist, kann anhand der gemessenen Spannung auf die Zusammensetzung in dem Elektrodenhohlraum 30 geschlossen werden.

In der Verlängerung der Erstreckungsrichtung des Gaszutrittslochs 26 ist ein Heizelement 42 in dem Schichtaufbau des Sensorelements 12 angeordnet. Das Heizelement 42 weist einen Heizbereich 44 und elektrische Zuleitungsbahnen 46 auf. Der Heizbereich 44 ist beispielsweise mäanderförmig ausgebildet. Das Heizelement 42 ist in dem Festelektrolyten 14 zwischen der Zwischenschicht und der Heizschicht angeordnet. Es wird ausdrücklich erwähnt, dass das Heizelement 42 beidseitig von einer dünnen Schicht aus einem elektrisch isolierenden Material, wie beispielsweise Aluminiumoxid, umgeben ist, auch wenn dies in den Figuren nicht näher dargestellt ist. Mit anderen Worten ist zwischen der Zwischenschicht und dem Heizelement 42 sowie zwischen dem Heizelement 42 und der Heizschicht die dünne Schicht aus dem elektrisch isolierenden Material angeordnet. Da eine derartige Schicht beispielsweise aus dem oben genannten Stand der Technik bekannt ist, wird diese nicht näher beschrieben. Für weitere Details bezüglich der Schicht aus dem elektrisch isolierenden Material wird daher auf den oben genannten Stand der Technik, verwiesen, dessen Inhalt betreffend die Schicht aus dem elektrischen Material durch Verweis hierin eingeschlossen ist.

Wie in Figur 1 gezeigt ist, ist der Sensor 10 mit einem elektronischen Steuergerät 48 verbunden. Das elektronische Steuergerät 48 weist ein Regelgerät 50 zum Regeln einer Nernstspannung U_{N} der Nernstzelle 40 auf. Der Sensor 10 und das Steuergerät 48 sind Teil einer Sensoranordnung 200. Die an die Pumpzelle 36 angelegte Pumpspannung U_{P} stellt die Stellgröße des elektronischen Steuergeräts 48 für die Regelung der Nernstspannung U_{N} dar. Dabei ist die Nernstspannung U_{N} gleichzeitig die Regelgröße. Auf diese Weise kann darüber hinaus der von der Sauerstoffkonzentration abhängige Pumpstrom I_{P}, der in die Pumpzelle 36 hineinfließt oder aus dieser herausfließt, bestimmt werden, der den Sauerstoffgehalt anzeigt.

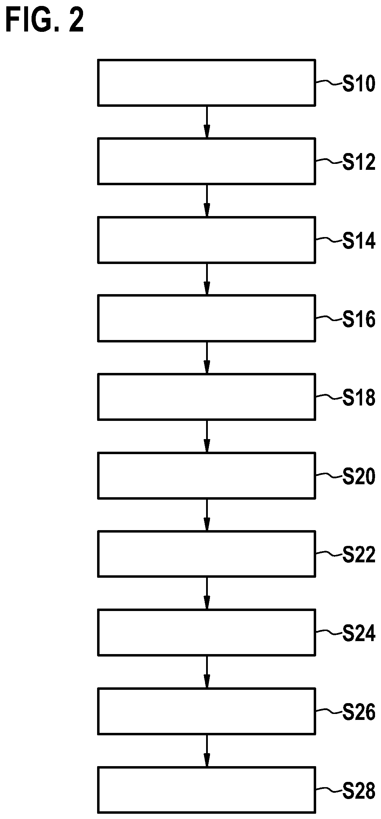

Figur 2 zeigt eine schematische Darstellung eines Ablaufs eines erfindungsgemäßen Verfahrens zum Betreiben des Sensors 10. Das Verfahren ermöglicht eine zuverlässige zylinder-individuelle Vertrimmungserkennung, indem ein Jitter-Anteil aus einem Pumpstromsignal eliminiert wird.

In Schritt S10 erfolgt in an sich bekannter und oben beschriebener Weise ein Regeln einer Nernstspannung U_{N} der Nernstzelle 40 entsprechend einer ersten Führungsgröße. Dabei wird als Stellgröße ein Pumpstrom oder eine Pumpspannung der Pumpzelle 36 verwendet. Ohne Beschränkung darauf wird das Verfahren insbesondere unter Bezugnahme auf den Pumpstrom I_{P} als Stellgröße beschrieben. Sofern der Sensor 10 eine Sprungsonde ist, kann der Schritt S10 entfallen. In Schritt S12 wird die Nernstspannung U_{N} der Nernstzelle 40 erfasst bzw. gemessen sowie eine die Eigenschaft des Messgases beschreibenden Zielgröße quantitativ bestimmt. Die Zielgröße ist die Nernstspannung U_{N} selbst oder eine davon abgeleitete Größe. Insbesondere ist das Stellgrößensignal ein Pumpstromsignal, dessen Messwerte erfasst bzw. aus der Nernstspannung U_{N} abgeleitet werden. In Schritt S14 wird basierend auf der Zielgröße ein Zielgrößendatenpaket aufgezeichnet. Ein solches Zielgrößendatenpaket umfasst mehrere Zielgrößenwerte, wie beispielsweise 5 Pumpstromwerte. Das Aufzeichnen der Messwerterfassung erfolgt beispielsweise in einer Basissoftware 52 des Steuergeräts 48 (Fig. 1). In Schritt S16 wird dem Zielgrößendatenpaket ein Zeitstempel zugeordnet. Mit anderen Worten wird zum Zeitpunkt der Messwerterfassung ein neu einzuführender Zeitstempel neben den bereits existierenden Pumpstromwerten aufgezeichnet. Die Aufzeichnung erfolgt durch Speichern in einem Speicher 54 der Basissoftware 52 des Steuergeräts 48. In Schritt S18 werden Zielgrößendatenpakete mit dem zugeordneten Zeitstempel in dem Speicher 54 gespeichert. Mit anderen Worten werden die Pumpstrom-Messwerte mit dem zugehörigen Zeitstempel in den Speicher 54 geschrieben.

In einem nachfolgenden Schritt S20 wird das Zielgrößendatenpaket auf einem Signalverarbeitungspfad 56 verarbeitet. Mit anderen Worten durchläuft das Pumpstrompaket den Signalverarbeitungspfad 56, in dem es aus verschiedenen Gründen zu unterschiedlichen Zeitverzögerungen kommen kann. Beispielsweise werden alle 2 ms neue Werte abgefragt, aber nur alle 2,5 ms neue Werte der Basissoftware 52 des Steuergeräts 48zur Verfügung gestellt. Der Signalverarbeitungspfad 56 ist Teil einer Anwendersoftware 58. Die Anwendersoftware 58 kann auf einem externen Steuergerät (nicht näher gezeigt), wie beispielsweise der Motorsteuerung, implementiert sein. In der Anwendersoftware 58 wird ein Teil der Signalverarbeitung durchgeführt, nämlich die drehzahlsynchrone Filterung. Die Anwendersoftware 58 umfasst einen Ringbuffer 60, in den die Messwerte mit dem zugehörigen Zeitstempel geschrieben werden.

In Schritt S22 wird eine aktuelle Systemzeit abgefragt. Die Systemzeit wird von der Basissoftware 52 angefragt. Diese ist dem aktuell verarbeiteten Pumpstrompaket um die aktuell vorliegende Latenz voraus. Das Aufzeichnen des Zielgrößendatenpakets erfolgt mit einer höheren Taktung als das Abfragen der aktuellen Systemzeit. So wird die Zielgröße alle 500 µs gemessen und die Systemzeit alle 2 ms abgefragt. Aus diesem Grund wird in einem Schritt S24 der Zeitstempel des aktuell verarbeiteten Zielgrößendatenpakets basierend auf einer vorbestimmten Zeitverzögerung und der aktuellen Systemzeit korrigiert. Die vorbestimmte Zeitverzögerung ist größer als eine Verzögerung beim Verarbeiten des Zielgrößendatenpakets auf dem Signalverarbeitungspfad, d.h. der konstante Zeitversatz ist größer als die mögliche gesamte Worst-Case-Verzögerung. Die vorbestimmte Zeitverzögerung ist konstant. Das Korrigieren des Zeitstempels umfasst dabei Addieren des dem aktuell verarbeiteten Pumpstrompaket zugeordneten Zeitstempels zu der aktuellen Systemzeit und Subtrahieren der aktuellen Systemzeit von dem Zeitstempel. Mit anderen Worten wird zum Zeitstempel des aktuell verarbeiteten Pumpstrompakets entsprechend die festgelegte, konstante Zeitverzögerung hinzugefügt und die aktuelle Systemzeit abgezogen.

In Schritt S26 wird der korrigierte Zeitstempel zum Bilden einer Anzahl von Messwerten konvertiert. Der Wert von Zeit ausgedrückt in einer Zeiteinheit wird also in eine Anzahl Messwerte konvertiert, die in dem genannten Beispiel der Faktor 2 ist, da 2 Pumpstromwerte pro 1 ms vorliegen. Basierend auf der Anzahl von Messwerten wird ein zeitlicher Korrekturindex für die Zielgröße ermittelt. Daraufhin wird in Schritt S28 ein korrigierter Zielgrößenwert basierend auf dem zeitlichen Korrekturindex ermittelt. Das Ermitteln des korrigierten Zielgrößenwerts basierend auf dem zeitlichen Korrekturindex umfasst Zugreifen auf einen in dem Ringbuffer 60 gespeicherten Zielgrößendatenpaket ausgehend von einem zuletzt gespeicherten Zielgrößendatenpaket. Der korrigierte Zielgrößenwert wird durch Subtrahieren des Korrekturindex von dem Index des zuletzt gespeicherten Zielgrößendatenpaket ermittelt. Aus der Konvertierung des Zeitwerts für den Zeitstempel in die Anzahl Messwerte erhält man also eine Differenz im Index, um die man in dem Ringbuffer 60 im Vergleich zum letzten vorhandenen Zielgrößenwert nach hinten springen muss. Im Ringbuffer 60 selbst werden vergangene Zielgrößenwerte so abgespeichert, dass man durch den Zeitversatz nach hinten nicht auf bereits überschriebene Werte zugreift. Dies wird über eine geeignete Buffergröße sichergestellt. Durch diese Methode erhält man bei dem genannten Beispiel bei Verarbeitung im 2ms-Raster ein konstantes Inkrementieren des Indexes des Ringbuffer 60 um 4 bei jedem Funktionsaufruf, was sich aus 4 Zielgrößenwerten pro 2 ms ergibt. Aufgrund das konstanten Inkrementierens ist sichergestellt, dass das Signal jitterfrei ist. Dies wird möglich durch die Einführung des konstanten zeitlichen Verzugs, der aber für übliche Anwendungen der zylinder-individuellen Vertrimmungs-Erkennung keinerlei Nachteile mit sich bringt. Der Algorithmus funktioniert ebenfalls, wenn die Funktion, die die Daten für die Anwenderfunktion bereitstellt, und die Funktion, die die Daten im Ringbuffer 60 speichert, in unterschiedlichen Rastern aufgerufen werden.

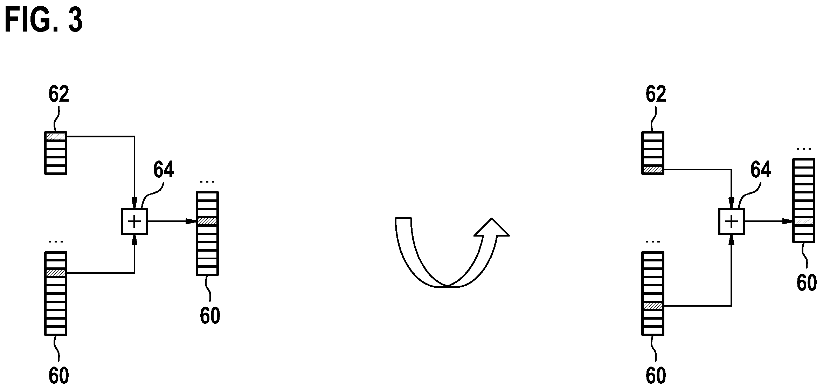

Figur 3 zeigt ein Blockschaltbild des Speichervorgangs für Pumpstromwerte beispielhaft als Zielgrößenwerte. Dargestellt ist im linken Teil der Figur 3 der Ringbuffer 60, der gespeicherte Pumpstromwerte enthält. Lediglich beispielhaft ist ein Pumpstromwert an Position 3 des Ringbuffer 60 angedeutet. Wie oben erläutert werden neue Pumpstromwerte erfasst und aufgezeichnet, wie beispielsweise als Zielgrößendatenpaket bzw. Pumpstromdatenpaket in Form eines Array 62 aus der Basissoftware 52 an Position 1 angedeutet ist. In den Ringbuffer 60 werden die neuen Pumpstromwerte geschrieben wie durch einen Additionsblock 64 angegeben ist. Hierbei wird immer die Summe aus dem vorherigen Wert, d.h. in dem genannten Beispiel an Position 3 des Ringbuffers 60, und dem neuen Wert, d.h. in dem genannten Beispiel Pumpstromdatenpaket an Position 1, im Ringbuffer 60 als neuer Wert abgespeichert. Entsprechend befindet sich dann anschließend der neue Pumpstromwert im Ringbuffer 60 an Position 4.

Diese Speicherschritte können n mal wiederholt werden, beispielsweise in einem 2 ms Raster. Dabei ist n eine ganze Zahl. Im rechten Teil der Figur 3 ist der Speichervorgang nach viermaliger Wiederholung dargestellt. So ist im rechten unteren Teil der Figur 3 beispielhaft ein Pumpstromwert an Position 7 des Ringbuffers 60 angedeutet. Wie oben erläutert sind neue Pumpstromwerte erfasst, wie in einem beispielsweise in dem Array an Position 5 angedeutet ist. Es werden die Summe aus dem aktuellen Wert des Pumpstrompaketes 62 (im Beispiel an Position 5) und dem alten Wert des Ringbuffers 60 an die neue Stelle des Ringbuffers 60 geschrieben (im Beispiel an Position 8).

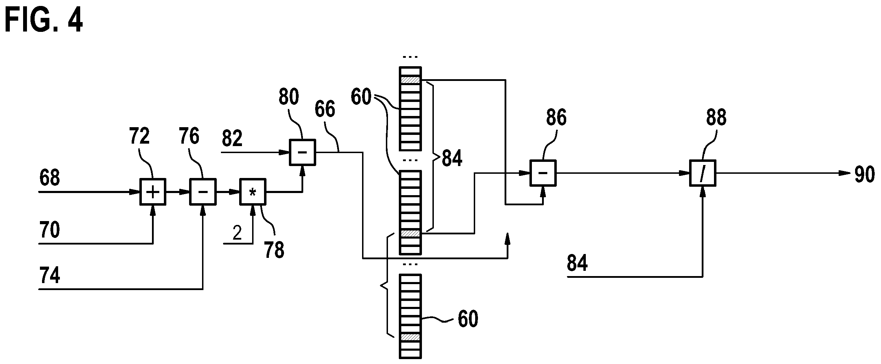

Figur 4 zeigt ein Blockschaltbild der Berechnung des Korrekturindexes ebenfalls beispielhaft für den Pumpstrom als Zielgröße. Das Blockschaltbild ist dabei gemäß dem AUTOSAR-Standard dargestellt. Links von dem Array 62 bzw. dem Ringbuffer 60 ist die Berechnung des Korrekturindex, d.h. Indexshift, dargestellt. Aus Gründen der Übersichtlichkeit ist das Array 62 geteilt dargestellt, da es ein sehr großes Array ist und beispielsweise 192 Werte umfassen kann. Die Ausgangsgröße für den Korrekturindex ist dabei mit 66 bezeichnet. Zum Zeitstempel 68 des aktuell verarbeiteten Pumpstrompakets wird die festgelegte, konstante Zeitverzögerung 70 hinzugefügt, wie durch einen Additionsblock 72 dargestellt ist, und die aktuelle Systemzeit 74 abgezogen, wie durch einen Subtraktionsblock 76 dargestellt ist. Dieser Wert von Zeit ausgedrückt in einer Zeiteinheit wird in eine Anzahl Messwerte konvertiert. Unter Bezugnahme auf das obige Beispiel geschieht dies durch einen Faktor 2, wegen 2 Pumpstromwerten pro 1 ms, wie durch einen Multiplikationsblock 78 dargestellt ist. Daraus erhält man eine Differenz, wie durch einen Substraktionsblock 80 dargestellt ist, im Index basierend auf dem aktuellen Index 82 des Ringbuffers 60, um die man in dem Ringbuffer 60 im Vergleich zum letzten vorhandenen Pumpstromwert nach hinten springen muss. Bei diesem Index startet eine segmentsynchrone Mittelwertbildung. Die für die Mittelwertbildung erforderliche Anzahl an Arrayelementen ist mit 84 bezeichnet.

Da im Array immer die Summe aus dem vorherigen und dem neuen Wert abgespeichert wird, muss der Anfang des Segments am Ende noch abgezogen werden, wie durch einen Subtraktionsblock 86 dargestellt ist, und zur finalen Mittelwertbildung muss noch durch die Anzahl der aufsummierten Werte 84 geteilt werden, wie durch einen Divisionsblock 88 dargestellt ist, wobei beide Berechnungen rechts vom Ringbuffer 60 dargestellt sind. Daraus wird dann schließlich der korrigierte Zielgrößenwert 90 als korrigierter Pumpstromwert ermittelt. Da die verwendete Anzahl an Arrayelementen 84 verändert werden kann und vergangene Zielgrößenwerte im Ringbuffer 60 ausreichend lange gespeichert werden, kann die Ermittlung des korrigierten Pumpstromwertes als Zielgrößenwert 90 in einem anderen Raster als sowohl das Einlesen als auch das Senden der Pumpstrompakete als Zielgrößendatenpakete 62 erfolgen.

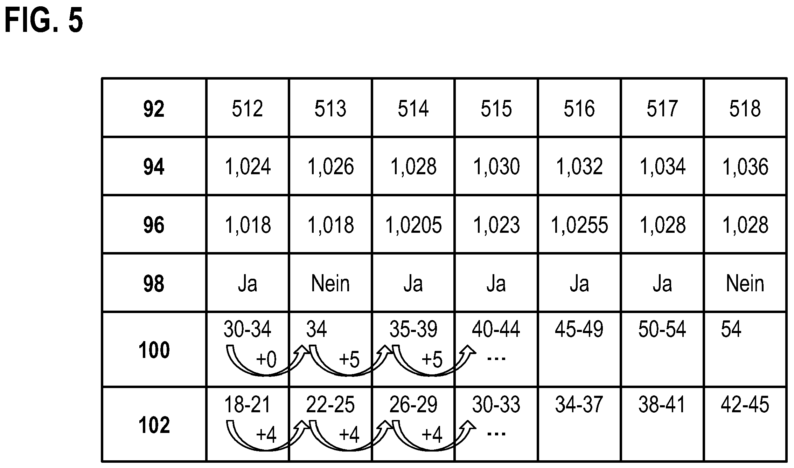

Figur 5 zeigt eine Tabelle mit beispielhaften Berechnungsgrößen für das erfindungsgemäße Verfahren. Dabei wird insbesondere auf das oben genannte Beispiel Bezug genommen, dass die Abfrage der Pumpstrompakete als Zielgrößendatenpakete mit einer anderen Taktung wie das Senden der Pumpstrompakete als Zielgrößendatenpakete erfolgt. In der ersten Zeile sind die Schrittnummern 92 der Signalabfrage für den Pumpstrom dargestellt. In der zweiten Zeile ist der Zeitstempel der Basissoftware 94, der die aktuelle Systemzeit angibt, in s dargestellt. In der dritten Zeile ist der Zeitstempel des aktuellen Pumpstromdatenpakets 96 in s dargestellt. In der vierten Zeile ist der Erhalt eines Pumpstromwerts 98 mit Ja / Nein dargestellt. In der fünften Zeile ist der aktuelle Index des Pumpstromarray 100 dargestellt. In der sechsten Zeile ist das für die Berechnung berücksichtigte Arrayelement 102 dargestellt. Auch ist in der Tabelle die beispielhafte Berechnung gemäß Figur 4 dargestellt.

## Patentansprüche

1. Verfahren zum Betreiben eines Sensors (10) zur Erfassung mindestens einer Eigenschaft eines Messgases in einem Messgasraum, insbesondere zur Erfassung eines Anteils einer Gaskomponente in dem Messgas, wobei der Sensor (10) ein Sensorelement (12) zur Erfassung der Eigenschaft des Messgases aufweist, wobei das Sensorelement (12) mindestens eine Nernstzelle (40) aufweist, wobei das Verfahren die folgenden Schritte umfasst:
- Messen einer Nernstspannung der Nernstzelle (40) und quantitative Bestimmung einer die Eigenschaft des Messgases beschreibenden Zielgröße basierend auf der Nernstspannung
- Aufzeichnen eines Zielgrößendatenpakets basierend auf der Zielgröße,
- Zuordnen eines aktuellen Zeitstempels (68) zu dem Zielgrößendatenpaket,
- Verarbeiten des Zielgrößendatenpakets auf einem Signalverarbeitungspfad (56),
- Abfragen einer aktuellen Systemzeit (74),
- Korrigieren des Zeitstempels (68) des aktuell verarbeiteten Zielgrößendatenpakets basierend auf einer vorbestimmten Zeitverzögerung (70) und der aktuellen Systemzeit (74),
- Konvertieren des korrigierten Zeitstempels zum Bilden einer Anzahl von Messwerten,
- Ermitteln eines zeitlichen Korrekturindex (66) für die Zielgröße basierend auf der Anzahl von Messwerten und
- Ermitteln eines korrigierten Zielgrößenwerts (90) basierend auf dem zeitlichen Korrekturindex (66).

2. Verfahren nach dem vorhergehenden Anspruch, wobei die Zielgröße die Nernstspannung oder eine davon abgeleitete Größe ist.

3. Verfahren nach dem vorhergehenden Anspruch, wobei die Zielgröße eine Stellgröße bei Regelung der Nernstspannung ist und diese Stellgröße ein Strom oder eine Spannung einer Pumpzelle (36) des Sensorelements (12) oder der Nernstzelle (40) ist.

4. Verfahren nach dem vorhergehenden Anspruch, wobei die vorbestimmte Zeitverzögerung (70) konstant ist.

5. Verfahren nach einem der vorhergehenden Ansprüche, wobei die vorbestimmte Zeitverzögerung (70) größer als eine Verzögerung beim Verarbeiten des Zielgrößendatenpakets auf dem Signalverarbeitungspfad (56) ist.

6. Verfahren nach einem der vorhergehenden Ansprüche, wobei das Korrigieren des Zeitstempels (68) Addieren des dem aktuell verarbeiteten Pumpstrompaket zugeordneten Zeitstempels zu und Subtrahieren der aktuellen Systemzeit (74) von dem Zeitstempel (68) umfasst.

7. Verfahren nach einem der vorhergehenden Ansprüche, weiterhin umfassend Speichern von Zielgrößendatenpaketen mit dem zugeordneten Zeitstempel (68) in einem Speicher (54).

8. Verfahren nach einem der vorhergehenden Ansprüche, wobei der Signalverarbeitungspfad (56) Teil einer Anwendersoftware (58) ist, wobei die Anwendersoftware einen Ringbuffer (60) umfasst.

9. Verfahren nach dem vorhergehenden Anspruch, wobei das Ermitteln des korrigierten Zielgrößenwerts basierend auf dem zeitlichen Korrekturindex (66) Zugreifen auf ein in dem Ringbuffer (60) gespeicherten Zielgrößendatenpaket ausgehend von einem in dem Ringbuffer (60) zuletzt gespeicherten Zielgrößendatenpaket umfasst.

10. Verfahren nach dem vorhergehenden Anspruch, wobei der korrigierte Zielgrößenwert durch Subtrahieren des Korrekturindex (66) von dem zuletzt gespeicherten Zielgrößendatenpaket ermittelt wird.

## Claims

1. Method for operating a sensor (10) for detecting at least one property of a measured gas in a measurement gas chamber, in particular for detecting a proportion of a gas component in the measured gas, wherein the sensor (10) comprises a sensor element (12) for detecting the property of the measured gas, wherein the sensor element (12) comprises at least one Nernst cell (40), wherein the method includes the following steps:
- measuring a Nernst voltage of the Nernst cell (40) and quantitatively determining a target variable describing the property of the measured gas based on the Nernst voltage,
- recording a target variable data packet based on the target variable,
- assigning a current time stamp (68) to the target variable data packet,
- processing the target variable data packet on a signal processing path (56),
- requesting a current system time (74),
- correcting the time stamp (68) of the currently processed target variable data packet based on a predetermined time delay (70) and the current system time (74),
- converting the corrected time stamp to form a number of measured values,
- ascertaining a time correction index (66) for the target variable based on the number of measured values, and
- ascertaining a corrected target variable value (90) based on the time correction index (66).

2. Method according to the preceding claim, wherein the target variable is the Nernst voltage or a variable derived therefrom.

3. Method according to the preceding claim, wherein the target variable is a manipulated variable when controlling the Nernst voltage, and this manipulated variable is a current or a voltage of a pump cell (36) of the sensor element (12) or of the Nernst cell (40).

4. Method according to the preceding claim, wherein the predetermined time delay (70) is constant.

5. Method according to any one of the preceding claims, wherein the predetermined time delay (70) is greater than a delay in processing the target variable data packet on the signal processing path (56).

6. Method according to any one of the preceding claims, wherein the correction of the time stamp (68) includes adding the time stamp assigned to the currently processed pump current packet and subtracting the current system time (74) from the time stamp (68).

7. Method according to any one of the preceding claims, further including storing target variable data packets with the associated time stamp (68) in a memory (54).

8. Method according to any one of the preceding claims, wherein the signal processing path (56) is part of user software (58), wherein the user software includes a ring buffer (60).

9. Method according to the preceding claim, wherein the ascertaining of the corrected target variable value based on the time correction index (66) includes accessing a target variable data packet stored in the ring buffer (60), starting from a target variable data packet stored last in the ring buffer (60).

10. Method according to the preceding claim, wherein the corrected target variable value is ascertained by subtracting the correction index (66) from the last stored target variable data packet.

## Revendications

1. Procédé de fonctionnement d'un capteur (10) destiné à détecter au moins une propriété d'un gaz de mesure dans un espace de gaz de mesure, en particulier pour détecter une proportion d'un constituant gazeux dans le gaz de mesure, le capteur (10) comportant un élément de détection (12) destiné à détecter la propriété du gaz de mesure, l'élément de détection (12) comportant au moins une cellule de Nernst (40), le procédé comprenant les étapes suivantes :
- mesure d'une tension de Nernst de la cellule de Nernst (40) et la détermination quantitative d'une variable cible décrivant la propriété du gaz de mesure sur la base de la tension de Nernst
- enregistrement d'un paquet de données de variable cible basé sur la variable cible,
- association d'un horodatage actuel (68) au paquet de données de variable cible,
- traitement du paquet de données de variable cible sur un trajet de traitement de signal (56),
- consultation d'un temps système actuel (74),
- correction de l'horodatage (68) du paquet de données de variable cible actuellement traité sur la base d'un retard prédéterminé (70) et du temps système actuel (74),
- conversion de l'horodatage corrigé pour créer un certain nombre de valeurs de mesure,
- détermination d'un indice de correction temporel (66) pour la variable cible sur la base du nombre de valeurs de mesure et
- détermination d'une valeur de variable cible corrigée (90) sur la base de l'indice de correction temporel (66).

2. Procédé selon la revendication précédente, dans lequel la variable cible est la tension de Nernst ou une variable dérivée de celle-ci.

3. Procédé selon la revendication précédente, dans lequel la variable cible est une variable de réglage pendant la régulation en boucle fermée de la tension de Nernst et ladite variable de réglage est un courant ou une tension d'une cellule de pompage (36) de l'élément de détection (12) ou de la cellule de Nernst (40).

4. Procédé selon la revendication précédente, dans lequel le retard prédéterminé (70) est constant.

5. Procédé selon l'une quelconque des revendications précédentes, dans lequel le retard prédéterminé (70) est supérieur à un retard se produisant lors du traitement du paquet de données de variable cible sur le trajet de traitement de signal (56).

6. Procédé selon l'une quelconque des revendications précédentes, dans lequel la correction de l'horodatage (68) comprend l'addition de l'horodatage associé au paquet de courant de pompage actuellement traité à l'horodatage (68) et la soustraction du temps système actuel (74) à l'horodatage.

7. Procédé selon l'une quelconque des revendications précédentes, comprenant en outre le stockage de paquets de données de variables cibles avec l'horodatage (68) associé dans une mémoire (54).

8. Procédé selon l'une quelconque des revendications précédentes, dans lequel le trajet de traitement de signal (56) fait partie d'un logiciel utilisateur (58), le logiciel utilisateur comprenant un tampon annulaire (60).

9. Procédé selon la revendication précédente, dans lequel la détermination de la valeur variable cible corrigée sur la base de l'indice de correction temporel (66) comprend l'accès à un paquet de données de variable cible stocké dans le tampon annulaire (60) en partant d'un paquet de données de variable cible stocké en dernier dans le tampon annulaire (60).

10. Procédé selon la revendication précédente, dans lequel la valeur de variable cible corrigée est déterminée par soustraction de l'indice de correction (66) au dernier paquet de données de variable cible stocké.
